# EUROPEAN PATENT APPLICATION

(11) **EP 0 838 311 A1**
(43) Date of publication of application: **29.04.1998**
(21) Application number: 97203301.3
(22) Date of filing: 24.10.1997
(51) Int. Cl.: B25H 1/00, B25H 1/10, B25H 1/14, B23Q 1/28, B23Q 1/54

(54) **Apparatus for movably mounting a workpiece**

(30) Priority: 25.10.1996 NL 1004362
(71) Applicant: Constructiebedrijf Willems B.V., 6657 CP Boven Leeuwen (NL)
(72) Inventor: Willems, Johannes Maria Antonius, 6658 AE Beneden Leeuwen (NL)
(74) Representative: Smulders, Theodorus A.H.J., Ir.

(57) **Abstract**

An apparatus (1) for movably setting up a workpiece for the purpose of working said workpiece, comprising a support frame (2,3) and mounting means (4,21) for work-holding fixtures, the mounting means (4,21) comprising a swivel head (4), which swivel head (4) is movably mounted on the support frame (2,3), in such a manner that during use the swivel head (4) with work-holding fixture is tiltable about a horizontal first axis (16) and rotatable about a second axis (R) extending at right angles to the first axis (16), wherein the swivel head (4) comprises a supporting platform (12) connected to the support frame (2,3) via a tilting axis (16) defining the first axis (16), and the supporting platform (12) comprises a platform member (13) rotatable about the second axis (R), adjusting means (25,27,28) being provided for mechanically adjusting the supporting platform (12) about the first axis (16), and braking means (22) being provided for securing and releasing the rotatable platform member (13), while mounting means (21) are provided for mounting work-holding fixtures on at least the rotatable platform member (13).

## Description

This invention relates to an apparatus for movably setting up a workpiece for working same, according to the preamble of claim 1. Such an apparatus is known from practice and is supplied by the firm of Palty BV, Elburg, the Netherlands.

This known apparatus comprises a support frame in the form of a post on which a spherical swivel head is movably arranged. On the swivel head a mounting pin is fitted which in an intermediate position of the swivel head extends approximately vertically on the side of the swivel head remote from the post, in line with the post. The mounting pin is fixed in an opening of the swivel head by welding. A work-holding fixture can be mounted on the mounting pin by means of a bush and, for instance, a clamping nut, and is adjustable together with the swivel head. The swivel head can tilt about at least a horizontal axis, perpendicular to the longitudinal direction of the post, and rotate about a second axis, which coincides with the longitudinal axis of the mounting pin.

In this known apparatus, a braking mechanism is provided in the post, which fixes the swivel head in a set position, at least secures it against movement. The braking mechanism is operated by air pressure and is biased in the release position. This means that if during use a workpiece is fixed on the swivel head by means of a work-holding fixture and the air pressure falls out, the swivel head can rotate freely about the first and/or second axis. This is undesirable since the workpiece may thereby be damaged, while high loads can arise for the worker on the workpiece if he wishes to counteract, or at least guide, the tilting movement of the swivel head with the workpiece. Further, the workman and by-standers may be injured by the workpiece suddenly moving. Moreover, each time the workpiece is adjusted with the swivel head, the braking mechanism must be operated, while the workpiece must be brought and held in the desired position by muscular force as long as the braking mechanism has not been set into operation. This is, in particular, ergonomically unacceptable and moreover, as a consequence, in particular in the case of workpieces which are, for instance, heavy and/or relatively cumbersome to manipulate, it is not possible, or only with very great effort, to set all desired positions accurately.

The known apparatus further has as a disadvantage that the work-holding fixture is to be secured on the mounting pin, which yields a one-point attachment. This means that the work-holding fixture upon loading will tend to rotate about the mounting pin, so that the set position of the workpiece to be worked will be lost. Moreover, the mounting pin will be subject to unacceptably high loads, with the result that it will break off or at least will become detached from the swivel head. This means that the workpiece will come loose and that damage to it is virtually unavoidable. Moreover, this renders the apparatus useless.

The object of the invention is to provide an apparatus of the type described in the preamble of the main claim, whereby the disadvantages mentioned are avoided, while maintaining the advantages thereof. To that end, an apparatus according to the invention is characterized by the features according to claim 1.

The use of a tiltable supporting platform with a platform member rotatable thereon, or at least relative thereto, provides the advantage that work-holding fixtures, where necessary, can be fixed in more than one position, so that a position-fixed attachment thereof with respect to the swivel head is always possible in a simple manner. Further, the forces exerted on the work-holding fixture by the workpiece and the worker are thus simply distributed over the different points of attachment and over the supporting platform, so that the chance of the workpiece becoming detached from the swivel head is reduced considerably. Since the supporting platform is tiltable about the tilting shaft, which constitutes the connection thereof to the support frame, the position of the supporting platform, and hence of a workpiece clamped thereon, can always be simply and uniformly determined. Attachment of the work-holding fixture to the rotatable platform member moreover enables in a simple manner rotation of the fixed workpiece about the second axis, at right angles to the first axis, and preferably at right angles to the supporting surface of the supporting platform.

The mechanical adjusting means for tilting the supporting platform provide the advantage that the supporting platform, together with a workpiece fixed thereon by means of a work-holding fixture, can be tilted without the operator having to use muscular force therefor, other than for the operating means, which can be of, for instance, electrical, electromechanical, pneumatic or hydraulic design. In this connection, it is possible for adjustment to be remote, optionally to pre-selected settings. The mechanical adjusting means moreover yield the advantage that the set position is always maintained as long as no adjustment by means of the adjusting means is initiated.

Further, the rotatable platform member provides the advantage that the work-holding fixture together with a workpiece clamped therein can be rotated relative to the rest of the supporting platform, so that the movements about the first axis and the movements about the second axis can, if desired, be effected independently of each other. As a consequence, the movements of the workpiece are better controllable than with the known apparatuses, and a more accurate setting is possible, at least, is easier to achieve. Moreover, the workpiece can be prevented at all times from moving under the influence of gravity if the operator does not so desire. The braking means for securing and releasing the rotation of the platform member relative to the further supporting platform then provide the advantage that the workpiece can be stopped in any desired position, which position is fixed by the braking means, even during tilting movements of the swivel head.

In an advantageous embodiment, an apparatus according to the invention is further characterized by the features according to claim 2.

By making the support frame of column-shaped design, a particularly slender support frame is obtained, so that upon tilting movements of the supporting platform collision of the workpiece with the support frame is simply avoided. Further, the height adjustment of the support column provides the possibility of always setting an ergonomically acceptable working height for the worker in question. The electromechanical length adjusting means then provide the advantage that such adjustment is simple and possible without manual force.

In a first preferred embodiment, an apparatus according to the invention is further characterized by the features according to claim 5.

The bearing-mounted top plate rotatable relative to the bottom plate provides the advantage that the rotational movement of the top plate is well guided, while moreover a simple confinement of the top plate with respect to the bottom plate in any other direction can be obtained. By including the braking means between the top plate and the bottom plate the rotational movement of the top plate relative to the bottom plate can be simply cleared or blocked. By connecting the bottom plate with the support frame, a suitable swivel head is obtained. The hose-shaped inflatable member, or a series of such members, enables a play-free locking of the top plate relative to the bottom plate by filling at least one inflatable member, while this movement can be released by at least partly emptying the or each filled inflatable member. Preferably, a single inflatable member is provided, extending along a portion of the top plate in approximately annular configuration and capable, at least in filled condition, of abutting against the top plate and bottom plate.

In a further preferred embodiment, an apparatus according to the invention is further characterized by the features according to claim 7.

Coupling a motor to the swivel head via a linkage enables in a simple manner a mechanical adjustment of the swivel head, controlled throughout its swiveling path, while moreover play is avoided without having to employ particularly costly gear transmissions or the like. By designing the motor with a braking mechanism or with a braking transmission, a braking of movements of the swivel head is obtained in a particularly advantageous manner. In normal use, it will not be possible to adjust the swivel head other than through the motor. The forces that can be exerted on the swivel head without changing the set tilt of the swivel head are obviously strongly dependent on the selected transmission or braking of the motor and the transmission ratios in the linkage. By the use of a motor or transmission with a high transmission ratio, that is, strongly braking, relatively great forces can be taken up. Thus, for instance, when using an apparatus according to the invention as an upholstery pillar, a transmission of, for instance, 1 to 300 will be advantageous because when the apparatus is used for upholstering relatively large objects such as a couch, relatively great moments will be transferred to the swivel head, while moreover the length of the arms of the force in the linkage will exhibit relatively small differences. A strongly braked motor or transmission then provides a stable setting, so that the swivel head, even upon strong loading, will remain in the set position and hence movements of the clamped workpiece are prevented.

In a further advantageous embodiment, an apparatus according to the invention is further characterized by the features according to claim 9.

In the use of an apparatus according to the invention it is of great importance that a workpiece that is fastened to the apparatus cannot come loose unintendedly. This is accomplished in a simple manner by the use of work-holding fixtures with clamping jaws, which clamping jaws are biased in the clamping direction. Only when the clamping jaws are sufficiently energized in a direction opposite to the bias will the clamping jaws release a clamped workpiece. This means that even if (additional) energization is applied in the clamping direction, when the energization drops out, for instance by drop-out of air pressure or electrical voltage, sufficient clamping force is present to keep the workpiece clamped.

An apparatus according to the invention is suitable in particular as an upholstery tool or otherwise in, for instance, furniture-making, but can also be used in all kinds of other applications for clamping workpieces, for instance in wood, metal or sheet-metal workshops, tool shops or in model construction.

Further elaborations of an apparatus according to the invention are given in the subclaims.

To clarify the invention, exemplary embodiments of the apparatus according to the invention will be described hereinafter, with reference to the drawings, wherein:
Fig. 1 is a front view of an apparatus according to the invention;
Fig. 2 is a partly cutaway side elevational view of an apparatus according to the invention, with vertical supporting platform;
Fig. 2a shows an apparatus according to Fig. 2, with the supporting platform in approximately horizontal position;
Fig. 3 is a top plan view of an apparatus according to the invention;
Fig. 4 is a top plan view of the swivel head of an apparatus according to Figs. 1-3, in partial section and fitted with work-holding fixtures;
Fig. 5 shows an apparatus according to Fig. 4, with an article of furniture clamped in the work-holding fixtures; and
Fig. 6 is a sectional view of a portion of the supporting platform.

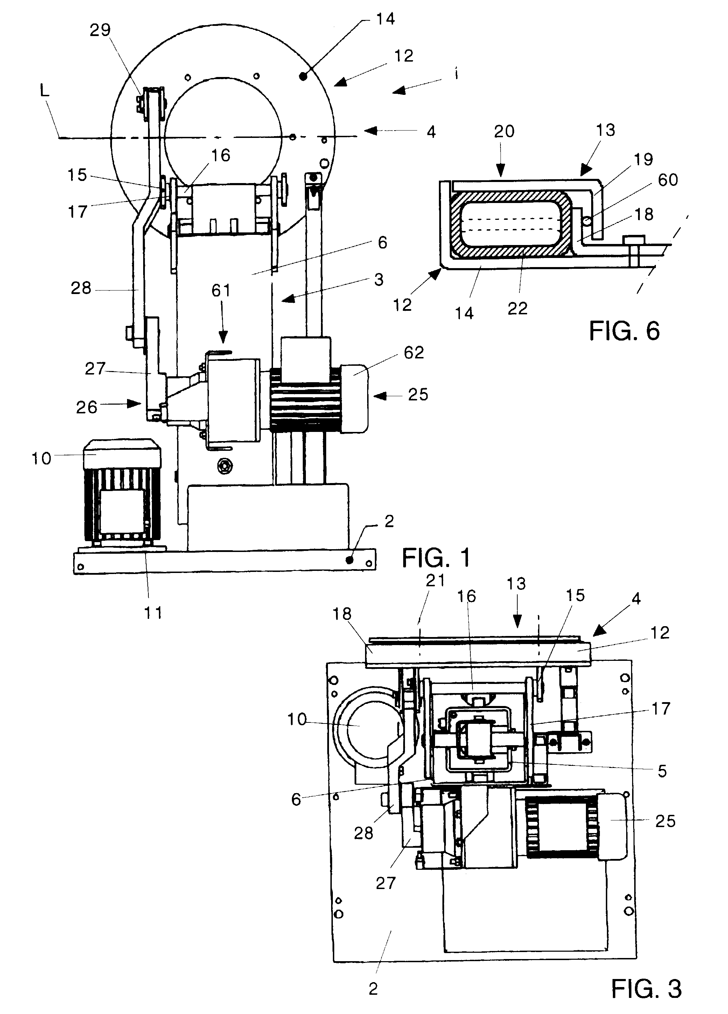

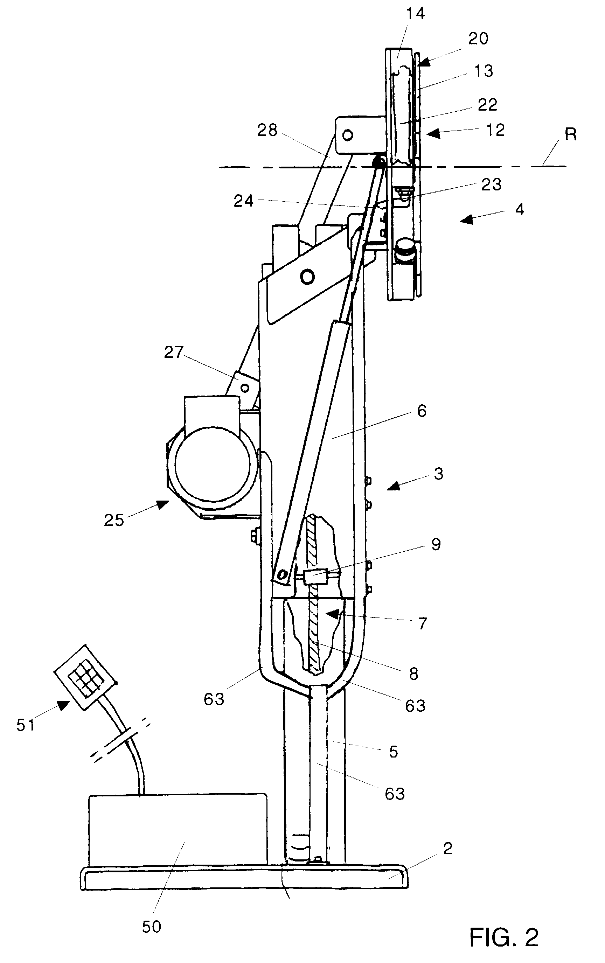

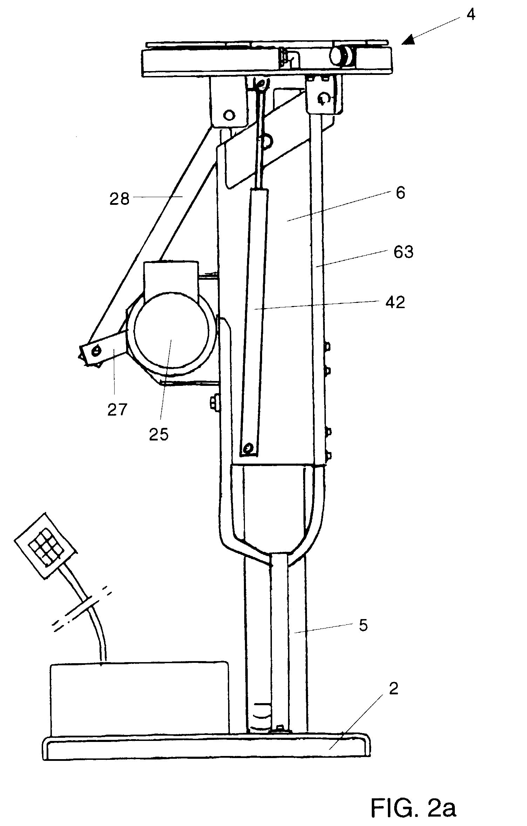

Figs. 1-3 show, in three views, an apparatus 1 according to the invention. This apparatus 1 comprises a base 2, a length-adjustable column 3 and a tiltable swivel head 4 mounted on the top of the column 3. In Fig. 1, the apparatus 1 is shown in a first, lower position, in Fig. 2 in a second, upper position. The column 3 comprises a tubular lower part 5 and a tubular upper part 6 slidable over part 5. Accommodated within the column 3 is an adjusting device 7, in the form of a screw spindle 8 and an adjusting screw 9. The adjusting screw 9 is secured to the upper part 6, the screw spindle 8 to the lower part 5 and the base 2. The screw spindle 8 is drivable by an electric motor 10 mounted on the base 2 and connected to the screw spindle 8 via a toothed-belt transmission. Through rotation of the screw spindle 8, the lower part 5 and the upper part 6 are moved relative to each other, whereby the height of the swivel head 4 above the base 2 is set. The toothed-belt transmission 11 in particular provides that during use, the length cannot be adjusted other than through driving the motor 10, so that the position set cannot change unintentionally.

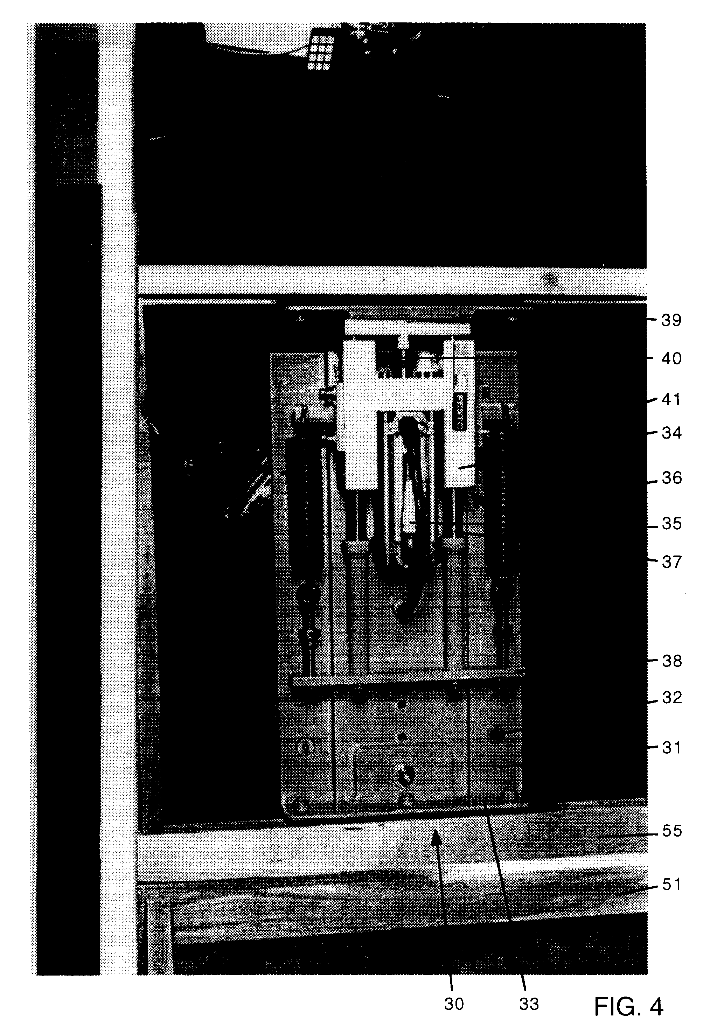

The swivel head 4 substantially consists of a supporting platform 12 with a platform member 13 which is rotatable relative thereto. To that end, an annular bottom plate 14 is provided, which, via two bearings 15, is connected to a tilting shaft 16. Via bearing blocks 17, the tilting shaft 16 is connected to the upper end of the upper part 6 of the column 3. For reasons to be further described hereinbelow, the bearings 15 are offset with respect to a centerline L of the supporting platform 12, extending parallel to the tilting shaft 16. Like the bottom plate 14, the platform member 13 is of annular design. From the bottom plate 14, a first annular, raised flange 18 extends in the direction away from the bearings 15 (Fig. 6). The platform member 13 comprises an annular top plate 20 and a second annular flange 19 depending from the inner edge of the top plate 20, parallel to the first flange 18. Between the first flange 18 and the second flange 19, ball-bearings 60 are included, which provide for the bearing of the top plate 20 with respect to the bottom plate 14, while movements of the flanges in any other direction are thereby prevented. Therefore the top plate 20 can rotate relative to the bottom plate 14 about a second axis R only. The second axis R extends at right angles to the tilting shaft 16. The top plate 20 is provided with at least two spaced apart points of attachment, in the embodiment shown four screw holes 21. A work-holding fixture can be fixed thereon, for instance the work-holding fixture according to Fig. 4, to be further described hereinafter.

Arranged between the bottom plate 14 and the top plate 20, along the first flange 18, is an air hose 22, extending along a large part of the perimeter of the annular edge 18 and including, for instance, an angle of 330°. At a first end, the air hose 22 is connected, via a valve 23, to an air line 24, while the opposite end is closed. Via known air means, such as a compressor or, preferably, a central compressed-air line, pressurized air can be introduced into the air hose 22, via the air line 24 and the valve 23, in such a manner that the air hose is inflated. In the condition where the air hose 22 is not, at least not fully, inflated (Fig. 6, broken lines), the air hose is clear of at least the top plate 20 and/or the bottom plate 14, at least it abuts thereagainst with a pressure so low that the top plate 20 can easily be manually rotated relative to the bottom plate 14. When the top plate 20 has been brought in a desired position with respect to the bottom plate 14, the air hose 22 is pressurized to such an extent that the pressure of the air hose 22, on the one hand on the bottom plate 14, at least the supporting platform 12, and on the other hand on the top plate 20, at least the rotatable platform member 13, provides such friction and/or clamping as to prevent rotation of the top plate 20 relative to the bottom plate 14, also in the case of common, relatively heavy loads on the swivel head 4. The use of the air hose 22 as braking means or blocking means for the rotational movement of the top plate 20 relative to the bottom plate 14 provides the advantage that the swivel head 4 can be steplessly secured, without play, in any position set, while no complex play-removing means or costly play-free transmissions need to be used. Even upon prolonged use and at relatively high loads, the swivel head 4 will remain free of play.

The valve 23 is provided in line with the air hose and is hence located between the top plate 20 and the bottom plate 14, well protected against contact from outside, so that damage to it is prevented in a simple manner. The valve 23 is of the non-return type, so that in the event of fall-out of the air pressure in the air line 24 and/or the central compressed-air line while the air hose 22 is inflated, the air cannot run out of the air hose 22. In such a condition too, therefore, the swivel head 4 will remain in the desired set position. The air hose 22 is simple to operate, simply replaceable, relatively cheap and has a long life.

Arranged adjacent the lower end of the upper part 6 of the column 3 is a drive 25 for driving the tilting movement of the swivel head 4 about the tilting shaft 16. To that end, the output shaft 26 of the drive 25 mounts a first end of an operating arm 27. The opposite end of the operating arm 27 is pivotally connected to the first end of a push-pull rod 28 extending along the column 3. The opposite end of the push-pull rod 28 is pivotally connected to a bearing block 29 on the underside of the bottom plate 14 of the swivel head 4, at a relatively great distance from the tilting shaft 16, adjacent the outer edge of the bottom plate 14. Upon, for instance, electrical drive of a motor accommodated in the drive 25, the operating arm 27 is rotated through an angle, so that the push-pull rod 28 is moved along the column 3. The swivel head 4 is thereby tilted about the tilting shaft; if the push-pull rod 28 moves down, the swivel head 4 pivots backwards, that is, down on the side remote from the tilting shaft 16; if the push-pull rod 28 moves up, the swivel head 4 pivots forwards, that is, up on the side remote from the tilting shaft 16. The maximum stroke of the swivel head 4 is mainly determined on the one hand by the length ratios of the rods 27, 28 of the linkage and on the other by the distance from the bearing block 29 and the tilting shaft 16. In the embodiment shown, this stroke starting from a horizontal intermediate position (Fig. 2a) of the supporting platform 13 is, for instance, 30° in rearward direction and 90° in forward direction (Fig. 2). Other degrees of freedom are also possible.

The drive 25 is of braking design, i.e. rotation of the output shaft 26 can be obtained only by driving the motor in question and not by manual effort, at least not without force. At normal load of the swivel head 4, which can be relatively high, the "braking" drive 25 will therefore prevent tilting of the swivel head 4 from a set position. The transmission ratio will be, for instance, above 1 to 75 and is preferably in the order of 1 to 300. To that end, a reduction gearbox 61 is provided between the motor 62 and the output shaft 26. It is noted that a braking drive, of course, can also be provided in a different way. Further, a gas spring or like damper 42 extends along the support column 3, by which movements of the swivel head are controlled and forces are transferred from the swivel head 4 to the upper part 6 of the support column 3. The gas spring 42 can support, or counteract, adjusting forces on the swivel head 4. Upon length adjustment of the column 3 the drive 25 moves up and down along with the upper part 6, so that the linkage does not need to have any length adjusting means or the like. The possible length adjustment of the column 3, of course, is dependent in particular on the length of the parts 5, 6 and the length adjusting means, and in the exemplary embodiment shown is for instance 40 cm: from 1 m (Fig. 1) to 1.4 m (Fig. 2). Obviously, other adjustment ranges and other maximum and minimum heights are possible.

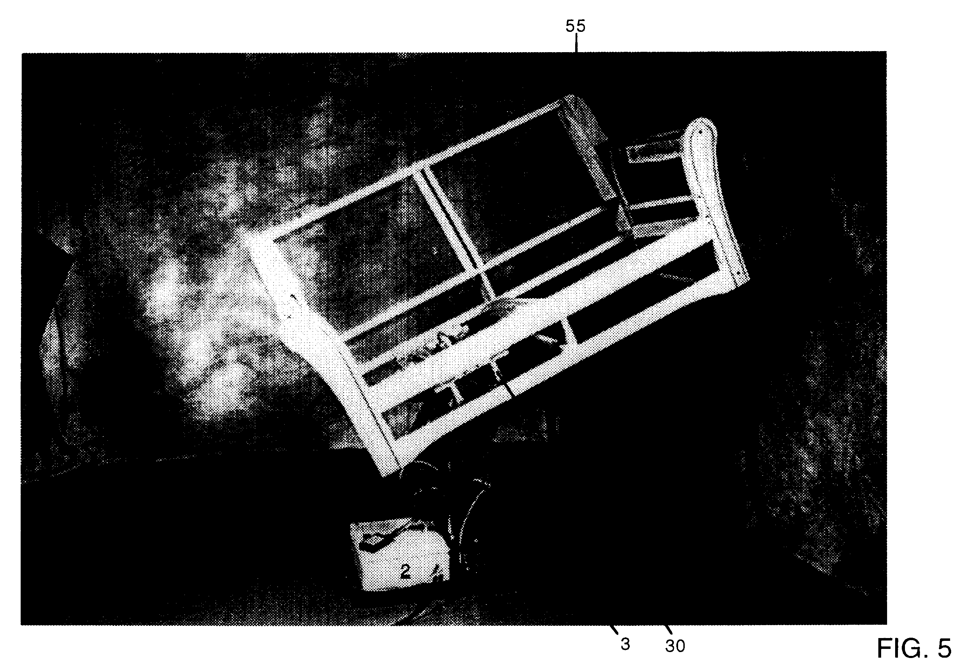

Figs. 4 and 5 show an apparatus as shown earlier, equipped with a work-holding fixture 30. This work-holding fixture 30 comprises a base plate 31 which is secured in the screw holes 21 in the top plate 20 by means of four fastening bolts 32. Secured on the base plate 31, adjacent a first end thereof, is a first clamping jaw 33, in the form of a raised edge. Mounted on the base plate 31 opposite the first clamping jaw is a base block 34 in which a central operating cylinder 35 is accommodated, as well as two guide bushes 36 arranged on opposite sides of the operating cylinder 35, parallel to each other, the operating cylinder 35 and the base plate 31. Through the guide bushes 36 extend two guide pins 37 which on the side proximal to the first clamping jaw 33 are connected by an end plate 38 and on the opposite side by a second clamping jaw 39 which extends approximately parallel to the first clamping jaw 33. The piston rod 40 of the operating cylinder 35, designed as an air cylinder, is also connected to the second clamping jaw 39. Arranged between the end plate 38 and the base block 34 are two draw springs 41, which urge the clamping jaws 33, 39 apart, at least bias them in the direction away from each other.

Upon energization of the operating cylinder 35, the second clamping jaw 39 will be moved against the action of the springs 41 in the direction of the first clamping jaw 33, while being guided by the guide pins 37 in the guide bushes 36. The distance between the clamping jaws 33, 39 thereby decreases, and a workpiece, for instance a couch 55, can be placed on the work-holding fixture 30. Then the energization of the cylinder 35 is removed, so that the second clamping jaw 39 is moved away from the first clamping jaw 33, against a part of the workpiece, while the first clamping jaw 33 abuts against another part of the workpiece. The springs 41 provide the desired clamping force.

As shown in Fig. 5 a work-holding fixture 30 as shown in more detail in Fig. 4 is particularly suitable for clamping an article of furniture for the purpose of working it, in particular for upholstering it, since the clamping jaws 33, 39 can engage the frame 51 of an article of furniture, for instance the depicted couch 55, from the inside, that is, can engage the parts not to be upholstered, so that upholstering the couch 55 is possible without the work-holding fixture having to re-engage the couch intermediately. Precisely in jobs such as upholstering furniture or like precision work, a play-free set-up of the workpiece is of major importance. For other workpieces, of course, a different work-holding fixture can be used, for instance with clamping jaws acting in opposite direction or with tiltable or otherwise rotatable clamping jaws for gripping, for instance, irregularly shaped products. It is then always preferred that means are provided for biasing the work-holding fixture in the clamping direction, independently of the energization means therefor.

At the base 2 a control unit 50 is provided for the different motors and the air hose 22. Connected to the control unit 50 is a remote control unit 51, for instance by a cable or through a wireless connection, by means of which remote control unit the various adjustments and settings of the swivel head 4 and the column 3 can be operated. Furthermore, a work-holding fixture, if any, as shown in Figs. 4 and 5 can be operable by means of the remote control unit 51. The apparatus according to the invention enables working with and on all kinds of workpieces, including workpieces which are heavy and/or relatively difficult to handle, in a safe, comfortable and ergonomically acceptable manner. The workpiece can be approached from all sides and be set in virtually any desired position and be set up free of play, without undue use of muscular force and without risk of the workpiece loosening or changing position unintendedly. Moreover, any pre-set positions can be set rapidly.

The end positions of the different moving parts such as the swivel head 4 and the column 3 are preferably limited by end switches.

The different operating hoses and cables which extend from the central control unit 50 to the different operating and driving means, in particular to the driving unit 25, the air hose 22, the gas spring 42 and optionally the work-holding fixture 30, are conveniently bundled and protected by a movable protection 63 so as to prevent damage.

In an alternative embodiment, not shown, the swivel head is connected with the upper end of the support column via at least two tilting shafts, which include an angle with each other and preferably extend at right angles to each other. This can be, for instance, a cardan or ball suspension. Two drives with linkages, comparable to those as described for the tilting movements of the swivel head 4 according to Figs. 1-3, are then included near the lower end of a movable upper part of the column. As a result, tilting movements of the swivel head in two planes, which are preferably at right angles to each other, can be obtained, so that the freedom of movement of the swivel head, in particular the supporting platform, is still further increased.

The invention is not in any way limited to the embodiments described in the description and shown in the drawings. Many variations thereof are possible.

Thus, length adjustment of the support column can be obtained in a different manner, and the support column may consist, for instance, of a single part or more than two parts. The drives for the movements of the swivel head and the support column can be made of different design. The swivel head can be made of different design, for instance with a closed upper part, or of a design other than annular. The rotary shaft for the movable platform member can be arranged differently, for instance through a central bearing-mounted shaft. Further, other braking means can be arranged for securing and releasing the platform parts. Thus, for instance, the air hose can be replaced by a series of air chambers having the same or at least a similar operation, while moreover additional mechanical braking means working by clamping or friction can be used. Furthermore, mechanical means, for instance a gearwheel drive engaging a gear ring, can be provided for adjusting the rotatable platform member relative to the bottom plate 14, so that this adjustment too can be remotely operated, while the braking means referred to can provide for play-free locking.

These and many other variations are considered to fall within the scope of the invention.

## Claims

1. An apparatus for movably setting up a workpiece for working said workpiece, comprising a support frame and mounting means for work-holding fixtures, the mounting means comprising a swivel head, which swivel head is movably mounted on the support frame, in such a manner that during use the swivel head with work-holding fixture is tiltable about a horizontal first axis and rotatable about a second axis extending at right angles to the first axis, characterized in that the swivel head comprises a supporting platform connected to the support frame via a tilting axis defining the first axis, and the supporting platform comprises a platform member rotatable about the second axis, adjusting means being provided for mechanically adjusting the supporting platform about the first axis, and braking means being provided for securing and releasing the rotatable platform member, while mounting means are provided for mounting work-holding fixtures onto at least the rotatable platform member.

2. An apparatus according to claim 1, characterized in that the support frame comprises a length-adjustable support column, with the swivel head mounted adjacent the upper end of the support column, while electromechanical length adjusting means are provided for the controlled adjustment of the length of the support column.

3. An apparatus according to claim 2, characterized in that the length adjusting means comprise a motor-driven adjusting spindle extending through the support column.

4. An apparatus according to any one of claims 1-3, characterized in that the swivel head comprises a bottom plate and a substantially ring- or disc-shaped top plate bearing-mounted with respect to the bottom plate, while between the bottom plate and the top plate braking means are arranged for securing or releasing rotation of the top plate relative to the bottom plate, and the bottom plate is connected to the first axis.

5. An apparatus according to claim 4, characterized in that the braking means comprise at least one hose-shaped inflatable member, with means being provided for filling the or each inflatable member with a fluid, in particular air, the arrangement being such that the or each inflatable member in filled condition presses against at least the top plate and prevents rotation thereof relative to the bottom plate, while the or each inflatable member in at least partly unfilled condition unblocks said rotation.

6. An apparatus according to any one of the preceding claims, characterized in that the adjusting means comprise a motor which is connected via a linkage with the swivel head for tilting the swivel head relative to the support frame.

7. An apparatus according to claim 6, characterized in that the motor is a motor with a braking mechanism or a motor provided with a braking transmission, in particular a transmission of more than 1 to 75, more particularly a transmission of more than 1 to 150 and preferably a transmission of 1 to 300 or more.

8. An apparatus according to any one of the preceding claims, characterized in that the first axis is situated adjacent a first side of the supporting platform, spaced from a position where the adjusting means engage the swivel head.

9. An apparatus according to any one of the preceding claims, characterized in that the apparatus comprises a work-holding fixture equipped with at least two clamping jaws adapted for relative movement, which clamping jaws are biased in the clamping direction.

10. An apparatus according to claim 9, characterized in that the clamping jaws are movable against the direction of bias by mechanical means, in particular means energized by air.
